# EUROPÄISCHE PATENTSCHRIFT

(11) **EP 1 675 369 B1**
(45) Veröffentlichungstag und Bekanntmachung des Hinweises auf die Patenterteilung: **27.02.2008**
(21) Anmeldenummer: 05022477.3
(22) Anmeldetag: 14.10.2005
(51) Int. Cl.: H04M 3/42

(54) **Verfahren und Vorrichtung zum anonymen Verbindungsaufbau in einem Telekommunikationsnetz**
Method and system for communicating anonymously in a telecommunications network
Procédé et système permettant une communication anonyme dans un réseau de télécommunication

(30) Priorität: 21.12.2004 DE 102004061356
(43) Veröffentlichungstag der Anmeldung: 28.06.2006
(73) Patentinhaber: Deutsche Telekom AG, 53113 Bonn (DE)
(72) Erfinder: Mehler, Christoph, Dipl.-Ing., 64367 Mühltal (DE)

(56) Entgegenhaltungen:
- DE-A1- 10 149 496
- US-A1- 2001 026 609
- US-A1- 2001 034 708

## Beschreibung

Die Erfindung betrifft ein Verfahren zum Kommunizieren in einem Telekommunikationsnetz gemäß Anspruch 1 und eine entsprechende Vorrichtung gemäß Anspruch 20, sowie einen Netzknoten gemäß Anspruch 16.

Aus der DE 199 34 145 A1 ist es bekannt, in einem Telekommunikationsnetz eine Kommunikationsverbindung mit einer vorzugsweise mobilen Kommunikationsendeinrichtung ohne Kenntnis der Rufnummer aufzubauen, indem beispielsweise eine Kraftfahrzeugnummer von einer speziellen Servereinrichtung in die Rufnummer umgesetzt wird.

Aus der DE 100 61 554 A1 ist es ferner bekannt, über ein Funknetz Fahrzeugidentifikationen zuzuordnen. Hierbei kann über ein Mobilfunkgerät eine Fahrzeugidentifikation wie beispielsweise ein Autokennzeichen eingegeben werden. Sofern diese Fahrzeugidentifikation in einer Verwaltungseinheit abgelegt und aktiviert ist, kann entsprechend einer ebenfalls abgelegten Verknüpfung ein Empfangsgerät wie beispielsweise ein Festnetztelefon an einem entsprechenden Festnetzanschluss kontaktiert werden.

Prinzipiell ist es also bekannt, eine Kommunikationsverbindung mit einem Teilnehmer ohne Kenntnis von dessen Rufnummer nur unter Eingabe von Fahrzeuginformationen wie dem Kennzeichen aufzubauen.

Weiterhin sind andere Formate für Rufnummern in Telekommunikationsnetzen wie beispielsweise die so genannten Vanity-Nummern bekannt, welche die Wahl einer Rufnummer bei Tastaturen mit abgedruckten Buchstaben erleichtern. Hierbei werden den einzelnen Zifferntasten 0-9 einer Telefontastatur jeweils mehrere Buchstaben zugeordnet. Durch bestimmte Ziffernkombination können damit einprägsame Worte als Rufnummer gewählt werden, z.B. entspricht T-E-L-E-K-O-M der Ziffernfolge 8-3-5-3-5-6-6. Vanity-Nummern können in Deutschland für die Mehrwertdienste-Rufnummern 0180, 0700, 0800 und 0190 beantragt werden.

Schließlich sind noch Chiffre-Nummern bekannt, die auf zugeordnete Rufnummern im Telekommunikationsnetz geleitet werden, wodurch Anrufern die den Chiffre-Nummern zugeordneten Rufnummern nicht bekannt gegeben werden müssen.

Nachteil der oben genannten Verfahren ist jedoch, dass bei einer Kommunikation zumindest einer der Kommunikationspartner, meistens der Anrufer vom Angerufenen anhand seiner Rufnummer identifizierbar ist. Eine rein anonyme Kommunikation, wie sie beispielsweise in Chats im Internet stattfindet, indem die Kommunikationspartner Pseudonyme anstelle ihrer wahren Namen verwenden, ist dadurch nicht möglich.

Die US2001034708A1 beschreibt einen Aufbau eines anonymen Übertragungskanals zwischen zwei Terminals. Dazu empfängt eine CPU eine Anforderung zum Aufbau des anonymen Übertragungskanals zusammen mit einem Pseudonym eines Teilnehmers und eines Anfragenden.

Die US2001026609A1 beschreibt eine Verwendung von Pseudonymen für anonyme Anrufe. Ein Verbindungsaufbau erfolgt mittels einem auf einer speziellen Webseite bereitgestellten Link.

Die DE 101 49 496 A1 beschreibt eine Kontaktaufnahme auf anfänglich anonymer Ebene zwischen Nutzern mobiler Endgeräte. Zur Kontaktaufnahme kann ein Kurzprofil dienen, dass ein Pseudonym eines Benutzers enthalten kann. Die Kontaktaufnahme erfolgt über ein Nahbereichs-Kommunikationssystem, das beispielsweise auf dem Bluetooth-Protokoll basiert. Durch Versenden eines Detailprofils kann einem Empfänger des Detailprofils angeboten werden, eine Telekommunikationsverbindung zu dem Sender des Detailprofils aufzubauen.

Aufgabe der vorliegenden Erfindung ist es nun, ein Verfahren und eine Vorrichtung zum Kommunizieren in einem Telekommunikationsnetz sowie einen Netzknoten vorzuschlagen, welche eine Kommunikation ermöglichen, bei der die Kommunikationspartner anonym bleiben können, d.h. sich jeweils nur unter Pseudonymen bekannt sind.

Diese Aufgabe wird durch ein Verfahren zum Kommunizieren in einem Telekommunikationsnetz mit den Merkmalen von Anspruch 1, durch einen Netzknoten mit den Merkmalen von Anspruch 16 und durch eine Vorrichtung zum Kommunizieren in einem Telekommunikationsnetz mit den Merkmalen von Anspruch 20 gelöst. Bevorzugte Ausgestaltungen der Erfindung ergeben sich aus den abhängigen Ansprüchen.

Ein der Erfindung zu Grunde liegender wesentlicher Gedanke besteht darin, dass Kommunikationspartner bzw. Teilnehmer Pseudonyme verwenden, denen im Telekommunikationsnetz die Daten bestimmter Kommunikationsmittel zugeordnet sind, z.B. eine Telefon- bzw. Rufnummer oder auch eine e-Mail-Adresse. Somit ergibt sich eine Kommunikationsbeziehung nur auf Basis der Pseudonyme des Anrufers und des Angerufen. Als Pseudonyme eignen sich beispielsweise Nicknames (Spitznamen), da sich diese von Kommunikationspartner leicht merken lassen und auch gut beworben werden können, z.B. durch entsprechende Aufkleber auf Fahrzeugen, Visitenkarten, T-Shirt-Aufdrucke oder dergleichen Werbemedien. Beispielsweise könnte ein Aufkleber signalisieren, dass ein Teilnehmer mit seinem KFZ-Kennzeichen an diesem Dienst teilnimmt. Dieser Aufkleber könnte werbewirksam z.B. an Tankstellen oder als Werbeflyer in Zeitschriften verteilt werden. Gemäß der Erfindung ist zudem vorgesehen, dass eine Kommunikationsverbindung nicht auf eine Sprachkommunikation beschränkt ist, sondern auch über Kurzmitteilungen oder e-Mails stattfinden kann.

Konkret betrifft die Erfindung nun ein Verfahren zum Kommunizieren in einem Telekommunikationsnetz, mit den folgenden Schritten:
a) Einleiten eines Kommunikationsverbindungsaufbaus durch einen ersten Teilnehmer durch Einwahl zu einem Dienst des Telekommunikationsnetzes und Senden von Teilnehmerdaten,
b) Überprüfen anhand der empfangenen Teilnehmerdaten, ob der erste Teilnehmer für den Dienst registriert ist,c) falls ja, Laden eines ersten Pseudonyms des ersten Teilnehmers aus einer Speichereinrichtung,
d) Empfangen eines zweiten Pseudonyms eines zweiten Teilnehmers, zu dem die Kommunikationsverbindung aufgebaut werden soll, vom ersten Teilnehmer,
e) Überprüfen, ob das empfangene zweite Pseudonym im Telekommunikationsnetz gespeichert ist,
f) falls ja, also falls das zweite Pseudonym vorhanden ist, Laden von dem zweiten Pseudonym zugeordneten Teilnehmerdaten des zweiten Teilnehmers aus einer Speichereinrichtung und Aufbau der Kommunikationsverbindung mit dem zweiten Teilnehmer,
g) falls nein, Beenden des Aufbaus der Kommunikationsverbindung.
Mit diesem Verfahren wird eine anonyme Kommunikation über ein Telekommunikationsnetz erreicht, indem Kommunikationspartner sich nur über deren Pseudonyme kennen. Beispielsweise kann damit ein Dienst für Flirts und Dates eingerichtet werden, bei dem eine anonyme Kommunikation möglich ist und die Rufnummern der Teilnehmer nicht bekannt gegeben werden müssen.

Vorzugsweise ist der Dienst über eine Vielzahl von Zugangstechnologien erreichbar, insbesondere über das Internet, per Telefon oder per Kurzmitteilung. Beispielsweise kann ein Teilnehmer des Dienstes eine SMS an den Dienst bzw. eine entsprechende Rufnummer des Dienstes versenden. Dann kann er über die Tastatur seines Telekommunikationsendgerätes oder per Sprachdialog ein Pseudonym, z.B. einen Nickname des gewünschten Kommunikationspartners eingeben. Alternativ kann der Teilnehmer über das Internet, genauer gesagt über eine entsprechende Webseite des Dienstes eine Kommunikationsverbindung anfordern. Schließlich ist es auch möglich, dass er per Telefon eine Rufnummer des Dienstes anruft und per Sprachdialog geleitet wird.

Um Einnahmen zu generieren, kann der Dienst, in den eingewählt wird, eine Premiumrufnummer im Telekommunikationsnetz oder bei einer Einwahl über das Internet ein Dienst sein, der über ein gesondertes Bezahlsystem abgerechnet wird. Bei jeder Kommunikation können dadurch für einen Betreiber des Dienstes Einnahmen generiert werden.

Beispielsweise kann ein Telekommunikationsnetzbetreiber diesen Dienst an Dritte vermarkten, die wiederum über den Dienst Flirt- oder Date-Kommunikationsdienstleistungen anbieten. Der Telekommunikationsnetzbetreiber kann mit den Teilnehmern des Dienstes beispielsweise über deren Telefonrechnung abrechnen und einen Teil der für den Dienst vereinnahmten Entgelte für den technischen Betrieb des Dienstes und der entsprechenden Plattform einbehalten. Der andere Teil der Einnahmen kann an den Dienstanbieter oder an "Reseller", die den Dienst vermarkten, weitergegeben werden.

Um vom erfindungsgemäßen Dienst beispielsweise unerwünschte Kommunikationspartner oder Teilnehmer fernzuhalten, kann vor dem Ausführen des Schrittes b) überprüft werden, ob die Teilnehmerdaten des ersten Teilnehmers in einer Sperrliste abgelegt sind, und ggf. kann der Aufbau der Kommunikationsverbindung mit einem Hinweis auf eine Sperre beendet werden. Diese Sperrliste ist Dienst-bezogen und wird vom Telekommunikationsnetzbetreiber bzw. vom Dienstanbieter / Reseller verwaltet. In der Sperrliste wir der Ursprung des ersten Teilnehmers überprüft und verwaltet, um zu verhindern, dass dieser sich nicht über ein neues Pseudonym anmelden kann, falls er bereits für den Dienst gesperrt wurde. Weiter kann eine automatische Übernahme von Teilnehmerdaten in diese Dienstsperrliste erfolgen, wenn ein Teilnehmer in einer gewissen Anzahl von kundenindividuellen Sperrlisten eingetragen ist. Unter kundenindividuellen Sperrlisten werden hier Listen verstanden, die von Kunden selbst verwaltet werden, so dass diese sich vor Belästigungen durch unerwünschte Kommunikationspartner schützen können.

Um auch nicht für den Dienst registrierten Teilnehmern einer Teilnahme zu ermöglichen, kann, falls die Überprüfung im Schritt b) ergibt, dass der erste Teilnehmer nicht für den Dienst registriert ist, eine weitere Überprüfung erfolgen, ob nicht für den Dienst registrierte Teilnehmer am Dienst teilnehmen dürfen. Beispielsweise kann ein Anbieter des Dienstes eine derartige Teilnahmeoption freischalten, um den Nutzerkreis des Dienstes zu vergrößern oder um einen zeitlich begrenzten Test des Dienstes zu ermöglichen.

Falls die weitere Überprüfung ergibt, dass nur registrierte Teilnehmer am Dienst teilnehmen dürfen, kann ein Hinweis an den ersten Teilnehmer erfolgen dass dieser sich für den Dienst registrieren muss; anschließend wird der Aufbau der Kommunikationsverbindung beendet. Der Hinweis kann beispielsweise als eine Art Werbehinweis für den Dienst ausgestaltet sein, um dem nicht registrierten Teilnehmer die Teilnahme am Dienst anzubieten; denkbar ist beispielsweise, dass mit dem Hinweis Informationen zur Registrierung wie eine Webadresse des Dienstes im Internet oder eine Rufnummer zum Registrieren übermittelt werden, oder dass ein nicht registrierter Teilnehmer sogar nach dem Hinweis zu einem Sprachdialog oder auf eine Webseite für die Registrierung geleitet wird.

Alternativ kann auch prinzipiell die Teilnahme für nicht registrierte Teilnehmer am Dienst erlaubt werden.

Dann kann in einer ersten Ausführungsform des erfindungsgemäßen Verfahrens, falls die weitere Überprüfung ergibt, dass nur registrierte Teilnehmer am Dienst teilnehmen dürfen, ein Hinweis an den ersten Teilnehmer erfolgen, dass seine Teilnehmerdaten an den zweiten Teilnehmer übertragen werden und anschließend mit Schritt d) fortgefahren wird. Somit wird der erste Teilnehmer darüber informiert, dass er am Dienst nicht anonym, d.h. unter einem Pseudonym teilnehmen kann, sondern durch seine Teilnehmerdaten von anderen Kommunikationspartnern identifizierbar ist.

In einer zweiten Ausführungsform des erfindungsgemäßen Verfahrens kann alternativ zur ersten Ausführungsform, falls die weitere Überprüfung ergibt, dass nur registrierte Teilnehmer am Dienst teilnehmen dürfen, ein Hinweis an den ersten Teilnehmer erfolgen, dass seinen Teilnehmerdaten automatisch ein erstes Pseudonym zugeteilt wird, das temporär in einer Speichereinrichtung des Telekommunikationsnetzes gespeichert und nach Beendigung der Benutzung des Dienstes durch den ersten Teilnehmer wieder gelöscht wird; danach kann das erste Pseudonym an den zweiten Teilnehmer übertragen werden, und anschließend kann mit Schritt d) fortgefahren werden.

Vorzugsweise umfassen die im Schritt f) aus der Speichereinrichtung im Telekommunikationsnetz geladenen Teilnehmerdaten des zweiten Teilnehmers Daten über Kommunikationsmittel des zweiten Teilnehmers, wie beispielsweise Rufnummern eines Festnetz- und Mobilfunknetzanschlusses oder eine e-Mail-Adresse.

Um Teilnehmer des erfindungsgemäßen Dienstes vor Belästigungen beispielsweise von unerwünschten Kommunikationspartnern zu schützen, kann vor dem Ausführen des Schrittes f) überprüft werden, ob die Teilnehmerdaten des ersten Teilnehmers in einer Sperrliste abgelegt sind, und ggf. kann der Aufbau der Kommunikationsverbindung mit einem Hinweis auf eine Sperre beendet werden. Die Sperrliste kann für jeden registrierten Teilnehmer des Dienstes angelegt werden; jeder Teilnehmer kann seine eigene Sperrliste verwalten, beispielsweise durch Anrufen des Dienstes und Bedienen über einen Sprachdialog oder Aufruf einer Webseite des Dienstes im Internet, Einloggen durch Eingabe von Teilnehmerdaten und Verwalten der Sperrliste über das Internet.

Die Kommunikationsverbindung mit dem zweiten Teilnehmer kann dann abhängig vom Zugangsweg des ersten Teilnehmers, der Erreichbarkeit von Kommunikationsmitteln des zweiten Teilnehmers und/oder einer in den geladenen Teilnehmerdaten gespeicherten Reihenfolge von Kommunikationsmitteln des zweiten Teilnehmers aufgebaut werden. Beispielsweise kann ein Sprachverbindung aufgebaut werden, wenn der erste Teilnehmer sich über ein Telefon Zugang zum Dienst verschafft, oder es kann eine SMS-Kommunikation aufgebaut werden, wenn der erste Teilnehmer eine SMS als Zugangsweg zum Dienst nutzt. Denkbar ist auch, dass sich der erste Teilnehmer über das Internet Zugang verschafft und auf der Webseite des Dienstes seine bevorzugte Kommunikationsform auswählt. Im übrigen kann auch der angerufene, d.h. der zweite Teilnehmer festlegen, auf welchen Kommunikationsweg er erreicht werden will, beispielsweise indem er über eine Webseite des Dienstes im Internet eine Art "Zielmanager" konfiguriert. Der "Zielmanager" kann derart komfortabel ausgestaltet sein, dass jeder Teilnehmer dadurch z.B. seine Erreichbarkeit selbst bestimmen kann, z.B. indem er eine Reihenfolge der Kommunikationswege festlegt, zeit- oder prioritätsgesteuert. Denkbar wäre beispielsweise, dass ein Teilnehmer festlegt, dass er eine Kommunikationsverbindung von 8-9 Uhr nur per Mobiltelefon, von 9-12 Uhr nur per e-Mail und von 12-18 Uhr nur per Festnetztelefon erlaubt. Besonders komfortabel ist es, wenn der Teilnehmer die erlaubte Kommunikationsverbindung abhängig von seiner Erreichbarkeit vollautomatisch vom Dienst steuern lässt, beispielsweise indem der Dienst im Falle einer angeforderten Kommunikationsverbindung mit dem Teilnehmer zuerst versucht, den Teilnehmer über sein Mobiltelefon zu erreichen, und falls der Teilnehmer den Anruf auf seinem Mobiltelefon nicht entgegen nimmt, umschaltet auf eine Kommunikation per Festnetztelefon, falls der Teilnehmer dort auch nichterreichbar ist, schließlich eine Kommunikationsverbindung per e-Mail oder SMS aufbaut. Eine Kommunikation kann also erfindungsgemäß beispielsweise von Mail, SMS/MMS oder Sprache zu Mail, SMS / MMS oder Sprache erfolgen. Hierbei muss die Kommunikation nicht über eine "eins zu eins"-Verbindung, also z.B. als reine Sprachverbindung erfolgen. Durch Funktionen wie Text zu Mail oder SMS/MMS zur Sprachumwandlung, oder Sprachumwandlung in Text wird eine Kommunikation zwischen allen Kommunikationsmedien gewährleistet. Um diesen Dienst betreiben zu können, solllte in der Realisierung die G10- Funktionalität (Gesetz zur Beschränkung des Brief-, Post- und Fernmeldegeheimnisses, Artikel 10-Gesetz - G 10) berücksichtigt und implementiert werden. Dies sollte nach Kundendaten und Pseudonym erfolgen. Es können sowohl die Daten wie Ursprung, Ziel, Datum Zeit, Dauer etc. als auch der Inhalt des Gesprächs für den überwachten Teilnehmer aufgezeichnet werden. Die soll mit dem bekanntem Mechanismus durchgeführt werden und wird hier nicht weiter erläutert. Um eine Nutzung und Teilname am Dienst so einfach und komfortabel wie möglich zu gestalten, kann eine Registrierung zum Dienst über das Internet, per Telefon oder per Kurzmitteilung erfolgen. Durch diese Vielzahl an Zugangswegen zum Dienst wird die Akzeptanz des Dienstes bei potentiellen Teilnehmern bzw. Nutzern wesentlich verbessert.

Eine Registrierung über das Internet läuft vorzugsweise wie folgt ab:
ein Server empfängt
ein Pseudonym und eine dazugehörige Zieladresse,
merkt das Pseudonym und die Zieladresse in einer Dienstdatenbank vor, generiert automatisch eine PIN für die Registrierung und versendet sie an die Zieladresse;
nach Empfangen der PIN trägt der Server das Pseudonym und die Zieladresse in der Dienstdatenbank ein , wodurch die Registrierung abgeschlossen ist und der Dienst für den registrierten Teilnehmer zur Verfügung steht. Durch die PIN-Übermittlung wird verhindert, dass eine Zieladresse ohne das Wissen des Besitzers für einen Dienst registriert wird.

Bei einer Registrierung per Kurzmitteilung sieht ein bevorzugter Ablauf wie folgt aus:
zunächst wird eine Kurzmitteilung mit einem Pseudonym empfangen und das Pseudonym zwischengespeichert, insbesondere in einer dafür vorgesehen Speichereinrichtung im Telekommunikationsnetz, beispielsweise in einem Netzknoten;
anschließend wird auf eine weitere Kurzmitteilung als Bestätigung gewartet;
nach Empfangen der Kurzmitteilung zur Bestätigung werden das Pseudonym und dazugehörige Teilnehmerdaten in einer Dienstdatenbank eingetragen.

Schließlich kann auch noch eine Registrierung per Telefon erfolgen. Dann sieht ein bevorzugter Ablauf wie folgt aus:
zunächst wird überprüft, ob die Rufnummer eines rufenden Teilnehmeranschlusses unterdrückt ist;
ist dies nicht der Fall, wird ein Pseudonym empfangen und zwischengespeichert, z.B. in einem Netzknoten des Telekommunikationsnetzes, genauer gesagt in einer entsprechenden Speichereinrichtung des Netzknotens;
dann wird auf eine Bestätigungsmeldung vom Teilnehmeranschluss gewartet;
nach Empfangen der Bestätigungsmeldung werden das Pseudonym und dazugehörige Teilnehmerdaten in einer Dienstdatenbank eingetragen. Wird die Rufnummer unterdrückt, bestehen folgende weitere Lösungsvarianten:

Durch eine entsprechende Anschaltung einer den Dienst implementierenden Plattform kann auch bei unterdrückter Rufnummer die Rufnummer erkannt werden. Im DSS1 / ISDN muss hierzu das Feature Category overwrite verwendet werden. Der vorgenannte Parameter im DSS1/ISDN wird z.B. auch bei Anschlüssen der Polizei und Feuerwehr eingesetzt. Somit kann die Rufnummer immer ausgewertet werden, auch wenn sie unterdrückt ist. Bei einer Anschaltung über z.B. eine INAP-Schnittstelle kann der Parameter CgPNo oder AddCgPNo ausgewertet werden. Insbesondere kann der Anrufer bei Vertragsabschluss über eine Teilnahme am Dienst in Kenntnis darüber gesetzt werden, dass auf die Rufnummer des Anschlusses zugegriffen wird, sowohl bei der Registrierung als auch bei der Nutzung des Dienstes.

Eine weitere Variante besteht darin, dass ein Kunde bei der Registrierung seine Rufnummer über eine Tastatur seines Telekommunikationsendgerätes oder per Sprachdialog eingeben muss; dann wird eine PIN für eine Freischaltung der Registrierung und Nutzung des Dienstes automatisch vom System erzeugt, gespeichert und an die eingegeben Rufnummer übertragen. Zur Freischaltung der Registrierung auf diesem Wege kann beispielsweise der Kunde aufgefordert sein, erneut den Registrierungsdialog anzurufen und diese PIN einzugeben. Diese PIN kann dann auch bei der Nutzung des Dienstes zur Authentifizierung verwendet werden.

Die Erfindung betrifft ferner einen Netzknoten eines Telekommunikationsnetzes, der programmtechnisch zum Ausführen eines Verfahrens gemäß der Erfindung eingerichtet ist. Beispielsweise kann dieser Netzknoten eine Vermittlungsanlage sein, die Software-technisch derart eingerichtet ist, dass sie das Verfahren gemäß der Erfindung implementiert.

Insbesondere umfasst der Netzknoten eine Datenbank, in der Datensätze gespeichert sind, die jeweils ein Pseudonym eines Teilnehmers am Dienst und dessen Teilnehmerdaten aufweisen.

Jeder Datensatz kann ferner eine Routingtabelle mit Weiterleitungszielen eines Teilnehmers umfassen.

Weiterhin kann jeder Datensatz ferner statistische Daten zur Nutzung des Dienstes durch einen Teilnehmer umfassen.

Schließlich kann der Netzknoten eine Schnittstelle aufweisen, über die ein Datensatz eines Teilnehmers über ein Datennetz, insbesondere das Internet verwaltet werden kann.

Ferner betrifft die Erfindung eine Vorrichtung zum Kommunizieren in einem Telekommunikationsnetz, die ausgebildet ist, ein Verfahren nach der Erfindung auszuführen. Eine derartige Vorrichtung weist vorzugsweise Mittel auf, welche zur Ausführung der Verfahrensschritte a) bis g) ausgebildet sind. Diese Mittel können beispielsweise Prozessormittel sein, die programmtechnisch zum Ausführen der entsprechenden Verfahrensschritte eingerichtet sind. Insbesondere umfasst die Vorrichtung einen Netzknoten wie vorstehend erläutert.

Aus der folgenden Beschreibung von Ausführungsbeispielen ergeben sich weitere Vorteile und Anwendungsmöglichkeiten der vorliegenden Erfindung. In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 die möglichen Kommunikationswege eines auf der Erfindung basierenden Dienstes;
Fig. 2 ein Flussdiagramm eines Ausführungsbeispiel des Ablaufs einer Registrierung für einen auf der Erfindung basierenden Dienst, und
Fig. 3 ein Flussdiagramm eines Ausführungsbeispiel der Kommunikation gemäß einem auf der Erfindung basierenden Dienst.
Bei der folgenden Beschreibung von Fig. 1 werden zum Teil verschiedene Verfahrensschritte erläutert, die in Fig. 2 dargestellt sind.

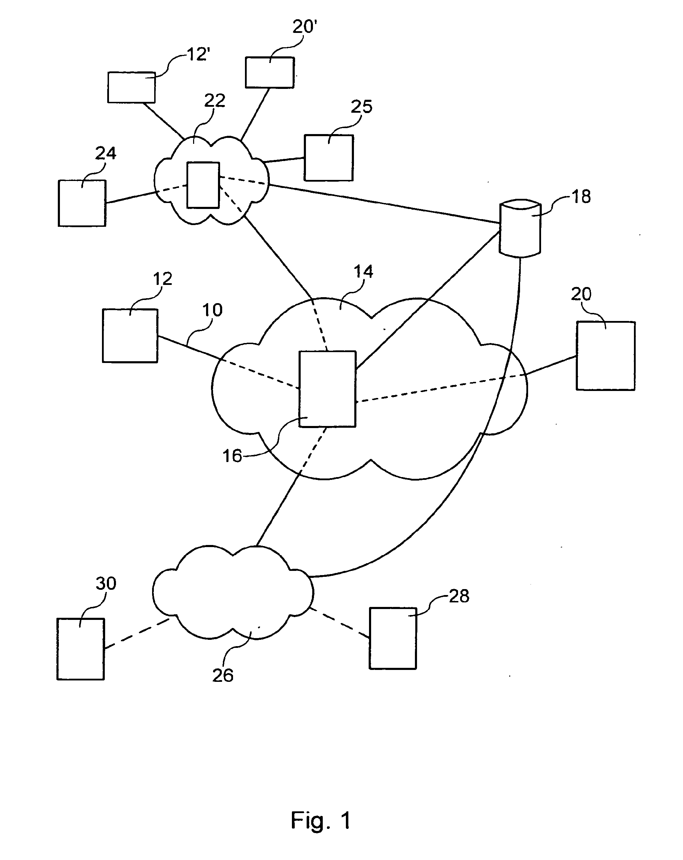

In Fig. 1 sind die möglichen Kommunikationswege des erfindungsgemäßen Dienstes in Form eines Blockdiagramms dargestellt.

Im Rahmen des Dienstes geht eine erste Kommunikationsverbindung 10 von einem ersten Festnetzanschluss 12 eines Telekommunikationsnetzes 14 aus (S01), indem von diesem Anschluss 12 eine Premium(ruf)nummer gewählt wird (S1). Diese Premiumnummer ist dem Dienst zugeordnet und ermöglicht eine höhere Vergebührung des Dienstes als bei herkömmlichen Sprachkommunikationsverbindung. Als weitere Zugangswege sind ein Zugang über das Internet 22 (S02) und einen damit verbundenen Computer (z.B. ein Personal Computer 24 oder ein Personal Digital Assistant 25), ein Zugang per Kurzmitteilung (S03) vorgesehen, z.B. per SMS/MMS, die vorzugsweise über ein Mobilfunknetz 26 und Mobilfunkendgeräte 28 und 30 (z.B. ein Personal Computer mit einer UMTS- oder einer GPRS-Datenkarte oder ein herkömmliches Mobiltelefon) versandt werden. Weiterhin ist ein Zugang über VoIP möglich. Als VoIP-Endgerät kann z.B. ein VoIP-fähiges Telefon 12' oder ein Personal Computer mit einem VoIP-Programm 20' dienen. Derartige VoIP-Endgeräte können entweder direkt oder über entsprechende Adapter mit dem Internet 22 kommunizieren.

Im Telekommunikationsnetz 14 wird die erste Kommunikationsverbindung 10 von einem Netzknoten 16 weitergeschaltet, der den Dienst verwaltet und auf den alle Rufe der Premiumnummer geschaltet werden. Der Netzknoten 16, genauer gesagt eine entsprechende Software im Netzknoten 16, welchen den Dienst implementiert, verwaltet eine Datenbank 18, in der Teilnehmerdaten und dazugehörige Pseudonyme in Form alphanumerischer Zeichenketten von registrierten Teilnehmern des Dienstes gespeichert sind. Die Datenbank 18 kann in einem beliebigen Netzwerk, z.B. dem Telekommunikationsnetz 18, Internet 22 oder einem anderen Netzwerk vorgesehen sein. Auf die Datenbank 18 kann nicht nur vom Netzknoten 16 aus, sondern auch über das Internet 22 oder vom Mobilfunknetz 26 aus zugegriffen werden. Nach einer Überprüfung, ob der erste Festnetzanschluss 12 für die Teilnahme am Dienst registriert ist, lädt er aus der Datenbank 18 einen Datensatz, der die Teilnehmerdaten des Festnetzanschlusses 12 und ein zugeordnetes Pseudonym des Festnetzanschlusses 12 aufweist.

Der Datensatz umfasst ferner eine Routingtabelle, in welcher ein Datensatzinhaber verschiedene Weiterleitungsziele für die Kommunikationsverbindung abgelegt hat. Diese Routingtabelle ist direkt über einen Internetzugang zum Netzknoten 16 und der Datenbank 18 vom Teilnehmer konfigurierbar und bietet in einem komfortablen Einstellmenü eine Vielzahl an Optionen für die Weiterleitung. Hier sind insbesondere ein "automatisches" Auffinden eines Ziels, je nachdem welches Ziel gerade "online" ist, oder für eine Sprachkommunikationsverbindung ein Parallelruf oder ein serielles Abfragen von Zielen, die vorher in einer Art "Zielkette" definiert wurden, zu nennen.

Im vorliegenden Fall soll eine Sprachkommunikationsverbindung zu einem zweiten Festnetzanschluss 20 aufgebaut werden. Dazu empfängt der Netzknoten 16 vom ersten Festnetzanschluss 12 ein Pseudonym, das dem zweiten Festnetzanschluss 20 zugeordnet ist. Nach Empfang des Pseudonyms lädt der Netzknoten 16 aus der Datenbank den dem zweiten Pseudonym zugeordneten Datensatz und entnimmt diesem Datensatz die Rufnummer des zweiten Teilnehmeranschlusses 20. Anschließend ruft der Netzknoten den zweiten Teilnehmeranschluss 20 an, um eine Sprachkommunikationsverbindung zwischen erstem und zweitem Teilnehmeranschluss 12 bzw. 20 aufzubauen. Hierbei überträgt der Netzknoten 16 an den zweiten Teilnehmeranschluss 20 keine Teilnehmerdaten des ersten Teilnehmeranschlusses und umgekehrt. Lediglich die den Teilnehmeranschlüssen zugeordneten Pseudonyme können übertragen werden. Dadurch wird eine anonyme Kommunikation ermöglicht. Hierzu unterdrückt der Netzknoten eine eventuell eingestellte Übertragung von Rufnummern.

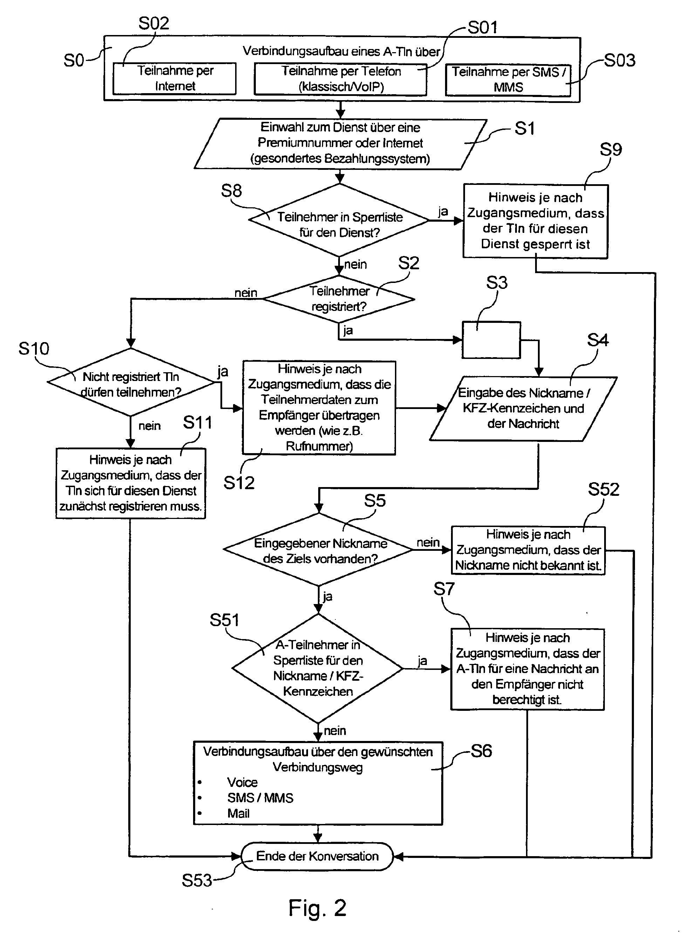

Fig. 2 zeigt anhand eines Flussdiagramms den Ablauf des Aufbaus einer Kommunikationsverbindung durch den erfindungsgemäßen Dienst. Nach der Einwahl zum Dienst über einen der verschiedenen Zugangswege (S1) wird geprüft, ob der rufende Teilnehmer, d.h. der die Kommunikationsverbindung anfordernde Teilnehmer in einer Sperrliste für den Dienst gespeichert ist (S1). Ein Teilnehmer kann in einer derartigen Sperrliste beispielsweise bei wiederholtem Missbrauch des Dienstes oder Belästigungen anderer Teilnehmer aufgenommen werden. Damit ist er von der Nutzung des Dienstes ausgeschlossen. Falls der Teilnehmer in der Sperrliste gespeichert ist, erhält einen vom Zugangsmedium abhängigen Hinweis (also z.B. per Sprachansage, Kurzmitteilung oder spezieller Webseite), der er für die Teilnahme am Dienst gesperrt ist (S9). Anschließend wird der Verbindungsaufbau beendet (S53).

Falls der Teilnehmer nicht für die Teilnahme am Dienst gesperrt ist, wird in einem darauf folgenden Schritt S2 überprüft, ob der Teilnehmer für den Dienst bereits registriert ist.

Ist dies der Fall, wird in einem Schritt S3 ein dem Teilnehmer zugeordnetes Pseudonym aus einer Speichereinrichtung des Telekommunikationsnetzes geladen (S3). Anschließend kann der Teilnehmer das Pseudonym, also beispielsweise einen Nickname oder ein KFZ-Kennzeichen des gewünschten Kommunikationspartners eingeben (S4).

Ist der Teilnehmer dagegen nicht für den Dienst registriert, wird in einem Schritt S10 verzweigt, in dem geprüft wird, ob ein Zugang für nicht registrierte Teilnehmer zugelassen ist. Ist dies nicht der Fall, erhält der nicht für den Dienst registrierte Teilnehmer einen Hinweis je nach Zugangsmedium, dass er sich für die Teilnahme für diesen Dienst erst registrieren lassen muss (S11). Anschließend wird wieder der Verbindungsaufbau beendet (S53). Ist dagegen der Zugang auch für nicht registrierte Teilnehmer zugelassen, erhält der Teilnehmer in einem Schritt S12 einen Hinweis je nach Zugangsmedium, dass die Teilnehmerdaten ein den Empfänger bzw. Kommunikationspartner wie z.B. die Rufnummer oder e-Mail-Adresse übertragen werden, d.h. eine nur einseitig anonyme Kommunikation stattfindet.

Anschließend wird im bereits oben erläuterten Schritt S4 fort gefahren. Im darauf folgenden Schritt S53 wird überprüft, ob der eingegeben Nickname oder das eingegebene KFZ-Kennzeichen des gewünschten Kommunikationspartners vorhanden ist, d.h. in einer Speichereinrichtung des Telekommunikationsnetzes gespeichert ist. Ist dies nicht der Fall, d.h. wenn der eingegeben Nickname oder das eingegebene KFZ-Kennzeichen nicht vorhanden sind, wird in einem Schritt S52 ein entsprechender Hinweis an den Teilnehmer ausgegeben und anschießend der Verbindungsaufbau beendet (S53).

Schließlich wird einem letzten Schritt S51 vor dem Herstellen der Kommunikationsverbindung überprüft, ob der Teilnehmer in einer Sperrliste für den gerufenen Teilnehmer, d.h. dessen Nickname oder KFZ-Kennzeichen darin gespeichert ist. In einer derartigen persönlichen Sperrliste kann jeder Diensteilnehmer unerwünschte Kommunikationspartner speichern, um sich vor Belästigungen zu schützen. Ist der rufenden Teilnehmer, d.h. der A-Teilnehmer in der Sperrliste gespeichert, erhält er in einem Schritt S7 einen entsprechenden Hinweis. Anschließend wird der Verbindungsaufbau beendet (S53). Ist er dagegen nicht in der Sperrliste gespeichert, erfolgt der Aufbau der Kommunikationsverbindung in einem Schritt S6 über den gewünschten Verbindungsweg, den der rufende Teilnehmer angegeben kann.

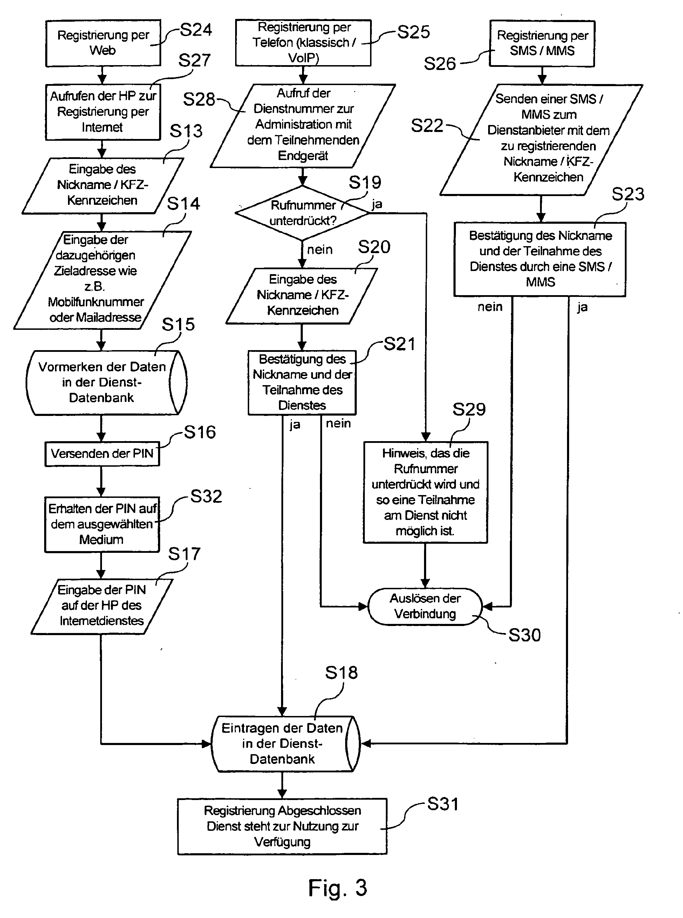

Anhand der Flussdiagramms von Fig. 3 werden nun die verschiedenen Registrierungswege für den Dienst erläutert.

Zunächst kann eine Registrierung per Internet (S24) erfolgen. Hierbei wird in einem Schritt S27 eine Homepage (HP) des Dienstes zur Registrierung aufgerufen. Auf der HP wird in eine Formular zunächst das Pseudonym, also beispielsweise ein Nickname oder ein KFZ-Kennzeichen eingegeben (S13). Ferner wird die dazugehörige Zieladresse, d.h. die Teilnehmerdaten wie beispielsweise eine Mobilfunkrufnummer oder eine Mailadresse eingegeben (S14). Diese Daten werden dann an einen Server versandt, der sie empfängt und in einer Dienstdatenbank vormerkt, d.h. die empfangenen Teilnehmerdaten zwischenspeichert (S15). Der Server generiert nun eine Personal Identifikation Number (PIN), die er an ein vom zu registrierenden Teilnehmer ausgewähltes Medium, z.B. per Kurzmitteilung an die Mobilfunkrufnummer des Teilnehmers versendet (S16). Anschließend erhält der Teilnehmer die PIN auf dem ausgewählten Medium (S32). Nun gibt er die PIN auf der HP des Dienstes ein und verschickt sie wiederum an den Server (S17). Der Server empfängt die PIN, überprüft sie und trägt bei erfolgreicher Überprüfung die Daten des Teilnehmers in die Dienstdatenbank ein (S18). Danach ist die Registrierung des Teilnehmers abgeschlossen und der Dienst steht dem Teilnehmer zur Nutzung zur Verfügung (S31). Aus Sicherheitsgründen kann das System auch derart ausgebildet sein, dass, sofern nach einer Karenzzeit von z.B. einer Stunde die gesendete PIN nicht im System erneut eingegeben wurde, die PIN verfällt und die vorgemerkten Daten zum Teilnehmer (Teilnehmerdaten) wie dessen Rufnummer und dergleichen Identifikationsdaten sowie das gewählte Pseudonym gelöscht werden. Wird innerhalb der Karenzzeit die richtige PIN eingegeben, ist die Registrierung erfolgreich abgeschlossen. Eine dreimalige Falscheingabe der PIN kann ebenfalls einen Löschvorgang der zwischengespeicherten Daten auslösen. Somit wird eine eindeutige Zuordnung zwischen der Web-Registrierung und dem Telefonanschluss bzw. Mailadresse gewährleistet.

Eine Registrierung kann ebenfalls per Telefon erfolgen, entweder auf dem klassischen Weg oder per Voice over IP (S25). Hierzu ruft ein Teilnehmer die Rufnummer des Dienstes zur Administration mit seinem Telekommunikationsendgerät, also beispielsweise seinem Festnetztelefon, seinem Mobiltelefon oder seinem VoIP-Telefon an (S28). In einem Schritt S19 wird daraufhin überprüft, ob die Rufnummernübertragung ausgeschaltet ist, d.h. die Rufnummer des rufenden Teilnehmeranschlusses unterdrückt ist. Ist dies der Fall, wird in einem Schritt S29 ein Hinweis an den Teilnehmer ausgegeben, dass seine Rufnummer unterdrückt ist und eine Registrierung zur Teilnahme am Dienst nicht möglich ist. Danach wird die Verbindung ausgelöst (S30).

Um jedoch auch eine Registrierung bei unterdrückter Rufnummernübertragung zu ermöglichen, können auch folgende weitere Lösungsvarianten vorgesehen sein:
durch eine entsprechende Anschaltung einer Dienst-Plattform (im DSS1 / ISDN muss hierzu das Feature Category overwrite verwendet werden) kann auch bei unterdrückter Rufnummer die Rufnummer erkannt werden. Der vorgenannte Parameter wird im Fall von DSS1/ISDN z.B. auch bei Anschlüssen der Polizei und Feuerwehr eingesetzt. Somit kann damit die Rufnummer immer ausgewertet werden. Bei einer Anschaltung über z.B. eine INAP-Schnittstelle kann der Parameter CgPNo oder AddCgPNo ausgewertet werden. Wie bereits erläutert, kann hierüber ein Kunde z.B. bei Vertragsabschluss oder bei der Registrierung darüber in Kenntnis gesetzt werden, dass auf die Rufnummer des Anschlusses zugegriffen wird, sowohl bei der Registrierung als auch bei der Nutzung des Dienstes. Eine weitere Variante besteht wie bereits oben beschrieben darin, dass der Kunde bei der Registrierung seine Rufnummer über sein Telekommunikationsendgerät, also z.B. über sein Telefon oder seinen Personal Computer eingeben muss. Dann empfängt er eine PIN mit seinem Endgerät, die vom System an die eingegeben Rufnummer geschickt wurde. Danach muss er erneut den Registrierungsdialog des Dienstes anrufen und diese PIN eingeben. Die PIN kann dann auch bei der Nutzung des Dienstes zur Authentifizierung verwendet werden.

Wird die Rufnummer auf einen dieser vorher vorgegebenen Wege übertragen, wird der Teilnehmer per Sprachdialog aufgefordert, ein Pseudonym, z.B. einen Nickname oder ein KFZ-Kennzeichen einzugeben (S20). Nach Empfangen des eingegeben Pseudonyms wird der Teilnehmer aufgefordert, die Teilnahme am Dienst zu bestätigen (S21). Falls er nicht bestätigt, wird die Verbindung ausgelöst und eventuelle zwischengespeicherte Daten des Teilnehmers werden gelöscht. Bestätigt der Teilnehmer die Teilnahme am Dienst, werden seine Daten in der Dienstdatenbank eingetragen (S18); der Teilnehmer ist damit registriert und er kann den Dienst nutzen (S31).

Weiterhin ist eine Registrierung per Kurzmitteilung, z.B. SMS oder MMS möglich (S26). Hierzu wird eine SMS oder MMS zum Dienstanbieter verschickt. Diese SMS bzw. MMS enthält das zu registrierende Pseudonym, z.B. einen Nickname oder KFZ-Kennzeichen (S22). Anschließend wird eine Bestätigung durch den Teilnehmer über die Teilnahme am Dienst und des gewählten Pseudonyms per SMS oder MMS angefordert (S23). Bestätigt der Teilnehmer, werden dessen Daten im Schritt S18 in der Dienstdatenbank gespeichert, und der Teilnehmer kann den Dienst nutzen (S31). Unterbleibt eine Bestätigung durch den Teilnehmer, wird dagegen die Verbindung ausgelöst (S30).

Beim Registrieren über unterschiedliche Medien wie das Internet bzw. Web-Interface, SMS/MMS oder über ein Dialogsystem mit einem Telefon (klassisch oder VoIP) kann immer auf ein und dieselbe Datenbank zugegriffen werden, um somit dem Nutzer den Weg zur Registrierung frei nach seiner Wahl bestimmen zu lassen und eine Konvergenz des Dienstes zu gewährleisten.

Bei der Registrierung sind für die Funktionalität folgende Angaben zwingend notwendig:
Die physikalische Adresse des Teilnehmers wie z.B. die Rufnummer des Mobiltelefons, welches am Dienst teilnehmen möchte, oder auch die Mailadresse;
Ein Pseudonym, wie z.B. ein Nickname.

Die Eingabe über das Internet kann einfach über ein Web-Interface erfolgen, wobei der Nutzer seine Daten per Tastatur eingibt.

Eine Eingabe über SMS/MMS ist besonders für Mobiltelefone geeignet ist, obwohl SMS auch über das Internet oder auch das Festnetz versandt werden können. Beispielsweise kann eine SMS mit einem Nickname über eine bestimmte Premiumnummer eingeben werden, wodurch eine gesonderte Abrechung des Dienstes erfolgen kann. In diesem Fall kann die Registrierung ohne zusätzliche PIN erfolgen, da sie von einem eindeutig festgelegten Zielanschluss erfolgt.

Bei der Eingabe über ein Dialogsystem per Telefon kann dies über eine Spracheingabe geschehen oder über Tasteneingabe. Bei Tastatureingabe wird für die Buchstaben und Sonderzeichen des Nickname / KFZ - Kennzeichen die Tastaturbelegung wie bei SMS vom Telefon verwendet. Die Eingabe kann dann über die verschieden Kodes erfolgen.

Die Registrierung kann über einen Registrierungszugang erfolgen, der speziell tarifiert werden kann, Der Tarif kann von "gebührenfrei" bis zu einem Premiumtarif gestaltet werden. Der Zugang zur Datenbank kann für die Voice-Applikationen und SMS / MMS über eine IN- oder NGN-Plattform erfolgen.

Der A-Teilnehmer wählt über eine Zugangsrufnummer bzw. Plattform den Nickname des gewünschten B-Teilnehmer an. Dies kann mittels einer SMS über eine spezielle Rufnummer (Premium-Rufnummer) geschehen. Weiter ist es möglich den B-Teilnehmer über eine Rufnummer wie z.B. eine Premium-Rate-Rufnummer anzurufen. In einem Dialog wird der A-Teilnehmer nach dem Pseudonym, z.B. dem Nickname oder dem KFZ-Kennzeichen gefragt. Diese kann er dann im Sprachdialog sprechen oder über einen Dialog per Tastatur eingeben. Wird der Dialog per Mail geführt, sollte eine Anmeldung erforderlich sein, um die Abrechung des Mehrwertes zu gewährleisten.

Die Kommunikation für Voice-Applikationen und SMS / MMS kann über eine Premiumrufnummer über eine IN- oder NGN-Plattform erfolgen. Bei einer Kommunikation über das Internet kann eine Bepreisung, die im folgenden noch genauer beschrieben wird, erfolgen.

Die "Mitgliedschaft" an diesem Dienst kann von gebührenfrei bis zu einer beliebigen Gebühr eingetragen sein. Dies kann durch den Dienstanbieter bestimmt werden. Sinnvoll ist es nur für die Kommunikation zwischen dem A-Teilnehmer und dem B-Teilnehmer ein Entgelt zu erheben. Um die Akzeptanz des Dienstes zu erhöhen, kann die Registrierung kostenlos sein.

Wird als Zugang das Internet benutzt, so kann hier über die bekannten Wege und Internet üblichen Verfahren abgerechnet werden. Diese können z.B. sein: T-Pay, Bonuspunkte wie Happy Digits, Clubmitgliedschaften, Registrierung mit Prepaid oder Bankeinzug, über die Telefonrechnung und auch Kreditkarte.

Da für die Kommunikation über SMS oder Telefon eine Rufnummer für den Dienst angewählt wird, kann für diese Rufnummer eine Premium-Rufnummer verwendet werden. Die Abrechnung über diese Premium-Rufnummer ermöglicht es dem Dienstanbieter, dass der Mehrwert über einen erhöhten Tarif bezahlt wird.

Durch die Registrierung bei dem Dienst und den eingegeben Daten können diese auch über die Zugangswege administriert werden. Wenn weiter Daten erwünscht oder erforderlich sind, können diese über das Internet / Web eingeben werden. Weiter ist eine Administration oder Verwaltung der Daten über MMS und zukünftige Anwendungen denkbar.

Um die Belästigungen, welche durch die Teilnahme an solch einem Dienst entstehen können so gering wie möglich zu halten, werden folgende Varianten zur Verfügung gestellt.

Wird ein Nutzer z.B. auf dem Weg einer SMS belästigt, so hat dieser die Möglichkeit, diese SMS an eine Administrations-Rufnummer weiter zu leiten, bzw. eine SMS an die Administrations-Rufnummer zu senden, in welcher der Inhalt und der Absender (z.B. dessen Nickname oder KFZ-Kennzeichen) enthalten ist. Diese Daten werden dann in die Datenbank aufgenommen und der störende Teilnehmer ist gesperrt. Die Sperre kann nach eine definierten Zeit wieder aufgehoben werden, oder durch einen Administrator aus der Datenbank gelöscht werden. Es ist auch möglich, einen weiteren "Zähler" im Hintergrund mitlaufen zu lassen, wenn z.B. ein Teilnehmer mehrere Male in einer Datenbank mit störenden Teilnehmern gespeichert war, dass er dann für diesen Dienst mit seinen ursprünglichen Teilnehmerdaten (Pseudonym und Ursprungsrufnummer) nicht daran teilnehmen kann.

Eine Sperre kann global für den Dienst oder aber auch nur zu einem einzelnen Ziel, d.h. anderen Teilnehmer verwendet werden.

Weiterhin kann eine automatische Übernahme in die Dienstsperrliste erfolgen, wenn ein Teilnehmer in einer gewissen Anzahl von kundenindividuellen Sperrlisten eingetragen ist, z.B. in den Sperrlisten von drei verschiedenen anderen Teilnehmern an dem Dienst eingetragen ist.

Hierzu kann im Rahmen des Dienstes regelmäßig, z.B. täglich eine routine ablaufen, welche die kundenindividuellen Sperrlisten auswertet und die darin gespeicherten Rufnummern bzw. Teilnehmerdaten sammelt und auswertet. Automatisch kann dann ein Teilnehmer in eine Dienstsperrliste eingetragen werden, wenn er in mehr als einer vorgegebenen Anzahl von kundenindividuellen Sperrlisten eingetragen ist.

Die Registrierungsdaten könnten erweitert werden und in gesonderte Sparten aufgeteilt werden. So könnte es möglich sein, weiter Angaben im Internet abzulegen und jedem Nutzer die Möglichkeit geben, weitere Informationen über registrierte Nutzer zu erhalten. Weiter könnte dann auch z.B. direkt ein Nickname ausgewählt und eine Kommunikation direkt aus dem Netz aufgebaut werden. Dies kann dann per Mail, Voicemail oder auch durch Klick to dial erfolgen.

Zum Abmelden vom Dienst können die gleichen Medien genutzt werden, wie zur Registrierung. Folgende Abmeldemöglichkeiten sollten bereitgestellt werden:
Temporäre Abmeldung (Daten bleiben bestehen),
Löschen der Teilnahme;
Automatisches Löschen der Teilnahme, wenn der Dienst über einen definierten Zeitraum nicht genutzt wurde.

Möchte ein Teilnehmer über einen begrenzten Zeitraum nicht am Dienst teilnehmen, so kann er sich temporär von diesem Dienst abmelden. Dies kann über die gleichen Wege wie beim Anmelden geschehen, z.B. per Internet/Web, Sprachdialog oder SMS. Ein erneutes Anmelden erfolgt auf dem gleichen Weg. Es kann z.B. ein Abmelden über einen SMS-Dialog und Anmelden über einen Sprachdialog möglich sein, wenn alle Zugangsarten auf die selbe Datenbank zugreifen.

Möchte ein Teilnehmer die Teilnahme am Dienst löschen, so kann dies z.B. per Internet/Web, Sprachdialog oder SMS erfolgen. Das Löschen kann über ein anderes Medium erfolgen als das Registrieren, wenn die unterschiedlichen Zugänge wieder zur gleichen Datenbank führen.

Wird der Dienst von einem Teilnehmer über einen vom Dienstanbieter definierten Zeitraum nicht genutzt, so kann der Teilnehmer automatisch aus der Datenbank gelöscht werden.

Bei der Realisierung des Dienstes kann eine Statistik vorgesehen werden, die folgende Felder beinhalten kann:
Anzahl der Kommunikationsverbindungen;
Anzahl der Kommunikationsverbindungen nach Ursprung;
Bei Gesprächen die Gesprächsdauer;
Anzahl der verschickten Kurzmitteilungen wie SMS/MMS;
Anzahl der verschickten Mails;
Anzahl der Sprachnachrichten;
Anzahl der registrierten Teilnehmer;
Anzahl der Teilnehmerin der Sperrliste.

Diese statistischen Daten können mit einem Teilnehmerdatensatz in der Dienstdatenbank gespeichert werden. Insbesondere kann ein Zugriff auf diese statistischen Daten per Sprachdialog, Internet oder auch Kurzmitteilung möglich sein, so dass sich ein Teilnehmer des Dienstes über seine Aktivitäten ein Bild machen kann. Vom Telekommunikationsnetzbetreiber und / oder Dienstbetreiber kann administriert werden, welche Statistikeinträge für den Kunden und welche für den Telekommunikationsnetzbetreiber und / oder Dienstbetreiber bestimmt sind. Der Telekommunikationsnetzbetreiber kann z.B. die höchste Hierarchie besitzen, d.h. Zugriff auf alle Statistiken haben und auch die Zugriffsmöglichkeiten einstellen können; in der nächsten Ebene kann der Dienstbetreiber kommen, der nur einen begrenzten Zugriff auf die Statistiken hat; zuletzt kann der Kunde kommen, der nur eine Sicht auf seine eigenen Statistiken besitzt. Somit stehen dem Telekommunikationsnetzbetreiber alle Statikmöglichkeiten zur Verfügung. Diese sind für die Plattform, den Dienst und den Kunden spezifisch vorgebbar.
- Abkürzung: Erläuterung
- AddCgPNo: additional Calling Party Number
- CgPNo: Calling Party Number
- IN: Intelligentes Netz
- INAP: Intelligent Network Application Part
- IP: Internet Protokoll
- MMS: Multimedia Messaging Standard
- NGN: Next generation Network
- SMS: short message service
- VolP: Voice over IP
- PDA: Personal Digital Assistant
- PC: Personal Computer

### BEZUGSZEICHENLISTE

- 10: Kommunikationsverbindung
- 12: erster Festnetzanschluss
- 12': erstes VoIP-Endgerät
- 14: Telekommunikationsnetz
- 16: Netzknoten
- 18: Datenbank
- 20: zweiter Festnetzanschluss
- 20': zweites VoIP-Endgerät
- 22: Internet
- 24: Personal Computer
- 25: Personal Digital Assistant
- 26: Mobilfunknetz
- 28, 30: Mobilfunkendgeräte

## Patentansprüche

1. Verfahren zum Kommunizieren in einem Telekommunikationsnetz, mit den folgenden Schritten:
a) Einleiten eines Kommunikationsverbindungsaufbaus durch einen ersten Teilnehmer durch Einwahl zu einem Dienst des Telekommunikationsnetzes und Senden von Teilnehmerdaten (S1), wobei der Dienst per Kurzmitteilung erreichbar ist,
b) Überprüfen anhand der empfangenen Teilnehmerdaten, ob der erste Teilnehmer für den Dienst registriert ist (S2),
c) falls ja, Laden eines ersten Pseudonyms des ersten Teilnehmers aus einer Speichereinrichtung (S3),
d) Empfangen eines zweiten Pseudonyms eines zweiten Teilnehmers, zu dem die Kommunikationsverbindung aufgebaut werden soll, vom ersten Teilnehmer (S4) mittels einer Kurzmittelung,
e) Überprüfen, ob das empfangene zweite Pseudonym im Telekommunikationsnetz gespeichert ist (S5),
f) falls ja, Laden von dem zweiten Pseudonym zugeordneten Teilnehmerdaten des zweiten Teilnehmers aus einer Speichereinrichtung und Aufbau der Kommunikationsverbindung mit dem zweiten Teilnehmer (S6),
g) falls nein, Beenden des Aufbaus der Kommunikationsverbindung (S7).

2. Verfahren nach Anspruch 1,
**dadurch gekennzeichnet, dass**
der Dienst ferner über das Internet und/oder per Telefon erreichbar ist.

3. Verfahren nach Anspruch 1 oder 2,
**dadurch gekennzeichnet, dass**
der Dienst, in den eingewählt wird, eine Premiumrufnummer im Telekommunikationsnetz oder bei einer Einwahl über das Internet ein Dienst ist, der über ein gesondertes Bezahlsystem abgerechnet wird.

4. Verfahren nach Anspruch 1, 2 oder 3,
**dadurch gekennzeichnet, dass**
vor dem Ausführen des Schrittes b) überprüft wird, ob die Teilnehmerdaten des ersten Teilnehmers in einer Sperrliste abgelegt sind (S8), und dass ggf. der Aufbau der Kommunikationsverbindung mit einem Hinweis auf eine Sperre (S9) beendet wird.

5. Verfahren nach einem der Ansprüche 1 bis 4,
**dadurch gekennzeichnet, dass**
falls die Überprüfung im Schritt b) ergibt, dass der erste Teilnehmer nicht für den Dienst registriert ist, eine weitere Überprüfung erfolgt, ob nicht für den Dienst registrierte Teilnehmer am Dienst teilnehmen dürfen (S10).

6. Verfahren nach Anspruch 5,
**dadurch gekennzeichnet, dass**
falls die weitere Überprüfung ergibt, dass nur registrierte Teilnehmer am Dienst teilnehmen dürfen, ein Hinweis an den ersten Teilnehmer erfolgt, dass dieser sich für den Dienst registrieren muss (S11) und anschließend der Aufbau der Kommunikationsverbindung beendet wird.

7. Verfahren nach Anspruch 5,
**dadurch gekennzeichnet, dass**
falls die weitere Überprüfung ergibt, dass nur registrierte Teilnehmer am Dienst teilnehmen dürfen, ein Hinweis an den ersten Teilnehmer erfolgt, dass seine Teilnehmerdaten an den zweiten Teilnehmer übertragen werden (S12) und anschließend mit Schritt d) fortgefahren wird.

8. Verfahren nach Anspruch 5,
**dadurch gekennzeichnet, dass**
falls die weitere Überprüfung ergibt, dass nur registrierte Teilnehmer am Dienst teilnehmen dürfen, ein Hinweis an den ersten Teilnehmer erfolgt, dass seinen Teilnehmerdaten automatisch ein erstes Pseudonym zugeteilt wird, das temporär in einer Speichereinrichtung des Telekommunikationsnetzes gespeichert wird und nach Beendigung der Benutzung des Dienstes durch den ersten Teilnehmer wieder gelöscht wird, danach das erste Pseudonym an den zweiten Teilnehmer übertragen wird (S12) und anschließend mit Schritt d) fortgefahren wird.

9. Verfahren nach einem der vorhergehenden Ansprüche,
**dadurch gekennzeichnet, dass**
die im Schritt f) aus der Speichereinrichtung im Telekommunikationsnetz geladenen Teilnehmerdaten des zweiten Teilnehmers Daten über Kommunikationsmittel des zweiten Teilnehmers umfassen.

10. Verfahren nach einem der vorhergehenden Ansprüche,
**dadurch gekennzeichnet, dass**
vor dem Ausführen des Schrittes f) überprüft wird, ob die Teilnehmerdaten des ersten Teilnehmers in einer Sperrliste abgelegt sind (S51), und dass ggf. der Aufbau der Kommunikationsverbindung mit einem Hinweis auf eine Sperre (S7) beendet wird.

11. Verfahren nach Anspruch 9,
**dadurch gekennzeichnet, dass**
die Kommunikationsverbindung mit dem zweiten Teilnehmer abhängig vom Zugangsweg des ersten Teilnehmers, der Erreichbarkeit von Kommunikationsmitteln des zweiten Teilnehmers und/oder einer in den geladenen Teilnehmerdaten gespeicherten Reihenfolge von Kommunikationsmitteln des zweiten Teilnehmers aufgebaut wird.

12. Verfahren nach einem der vorhergehenden Ansprüche,
**dadurch gekennzeichnet, dass**
eine Registrierung zum Dienst über das Internet, per Telefon oder per Kurzmitteilung erfolgen kann.

13. Verfahren nach Anspruch 12,
**dadurch gekennzeichnet, dass**
bei einer Registrierung über das Internet ein Server
ein Pseudonym (S13) und eine dazugehörige Zieladresse (S14) empfängt,
das Pseudonym und die Zieladresse in einer Dienstdatenbank vormerkt (S15),
automatisch eine PIN für die Registrierung generiert und an die Zieladresse versendet (S16), und
nach Empfangen der PIN (S17) das Pseudonym und die Zieladresse in der Dienstdatenbank einträgt (S18), wodurch die Registrierung abgeschlossen ist und der Dienst für den registrierten Teilnehmer zur Verfügung steht.

14. Verfahren nach Anspruch 12 oder 13,
**dadurch gekennzeichnet, dass**
bei einer Registrierung per Kurzmitteilung
eine Kurzmitteilung mit einem Pseudonym empfangen und das Pseudonym zwischengespeichert wird (S22),
auf eine weitere Kurzmitteilung als Bestätigung gewartet wird (S23), und
nach Empfangen der Kurzmitteilung zur Bestätigung das Pseudonym und dazugehörige Teilnehmerdaten in einer Dienstdatenbank eingetragen werden (S18).

15. Verfahren nach Anspruch 12, 13 oder 14,
**dadurch gekennzeichnet, dass**
bei einer Registrierung per Telefon
überprüft wird, ob die Rufnummer eines rufenden Teilnehmeranschlusses unterdrückt ist (S19),
falls nein, ein Pseudonym empfangen und zwischengespeichert wird (S20),
auf eine Bestätigungsmeldung vom Teilnehmeranschluss gewartet wird (S21), und
nach Empfangen der Bestätigungsmeldung das Pseudonym und dazugehörige Teilnehmerdaten in einer Dienstdatenbank eingetragen werden (S18).

16. Verfahren nach Anspruch 15,
**dadurch gekennzeichnet, dass**
durch Setzen eines entsprechenden Parameters in einer den Dienst implementierenden Plattform bei unterdrückter Rufnummer die Rufnummer erkannt wird.

17. Verfahren nach Anspruch 15,
**dadurch gekennzeichnet, dass**
falls festgestellt wird, dass die Rufnummer des rufenden Teilnehmeranschlusses unterdrückt ist, eine Aufforderung zur Eingabe der Rufnummer erfolgt, nach Empfang einer eingegebenen Rufnummer automatisch eine PIN zur Freischaltung der Registrierung und Authentifizierung zur Nutzung des Dienstes generiert, gespeichert und an die eingegebene Rufnummer übertragen wird.

18. Netzknoten (16) eines Telekommunikationsnetzes (14), der programmtechnisch zum Ausführen eines Verfahrens nach einem der vorhergehenden Ansprüche eingerichtet ist.

19. Netzknoten nach Anspruch 18,
**dadurch gekennzeichnet, dass**
er eine Datenbank (18) umfasst, in der Datensätze gespeichert sind, die jeweils ein Pseudonym eines Teilnehmers am Dienst und dessen Teilnehmerdaten aufweisen.

20. Netzknoten nach Anspruch 19,
**dadurch gekennzeichnet, dass**
jeder Datensatz ferner eine Routingtabelle mit Weiterleitungszielen eines Teilnehmers umfasst.

21. Netzknoten nach Anspruch 19 oder 20,
**dadurch gekennzeichnet, dass**
jeder Datensatz ferner statistische Daten zur Nutzung des Dienstes durch einen Teilnehmer umfasst.

22. Netzknoten nach einem der Ansprüche 18 bis 21,
**dadurch gekennzeichnet, dass**
er eine Schnittstelle aufweist, über die ein Datensatz eines Teilnehmers über ein Datennetz, insbesondere das Internet verwaltet werden kann.

23. Vorrichtung zum Kommunizieren in einem Telekommunikationsnetz, die ausgebildet ist, ein Verfahren nach einem der Ansprüche 1 bis 17 auszuführen.

24. Vorrichtung nach Anspruch 23,
**dadurch gekennzeichnet, dass**
sie einen Netzknoten nach einem der Ansprüche 19 bis 22 umfasst.

## Claims

1. Method for communicating in a telecommunications network, having the following steps:
a) initiation of communication connection setup by a first subscriber by dialing in to a service of the telecommunications network and transmitting subscriber data (S1), wherein the service is reachable by SMS message,
b) checking by means of the received subscriber data whether the first subscriber is registered for the service (S2),
c) if so, loading a first pseudonym of the first subscriber from a storage device (S3),
d) receiving from the first subscriber (S4), by means of an SMS message, a second pseudonym of a second subscriber to whom the communication connection is to be set up,
e) checking whether the received second pseudonym is stored in the telecommunications network (S5),
f) if so, loading, from a storage device, the subscriber data of the second subscriber associated with the second pseudonym and setting up the communication connection with the second subscriber (S6),
g) if not, terminating setup of the communication connection (S7).

2. Method according to claim 1, **characterized in that** the service is also reachable via the Internet and/or by telephone.

3. Method according to claim 1 or 2, **characterized in that** the service that is dialed into is a premium calling number in the telecommunications network, or in the case of dial-in through the Internet is a service that is charged through a separate payment system.

4. Method according to claim 1, 2 or 3, **characterized in that** before step b) is carried out, a check is made as to whether the subscriber data of the first subscriber are stored in a restricted list (S8), and **in that** if applicable, setup of the communication connection is terminated with notification of a restriction (S9).

5. Method according to any one of claims 1 through 4, **characterized in that**, if the check in step b) has the result that the first subscriber is not registered for the service, an additional check is performed to determine whether subscribers not registered for the service are allowed to participate in the service (S10).

6. Method according to claim 5, **characterized in that** if the additional check has the result that only registered subscribers may participate in the service, the first subscriber is notified that he must register for the service (S11), whereupon the setup of the communication connection is terminated.

7. Method according to claim 5, **characterized in that** if the additional check has the result that only registered subscribers may participate in the service, the first subscriber is notified that his subscriber data are being transmitted to the second subscriber (S12), whereupon the method continues from step d).

8. Method according to claim 5, **characterized in that** if the additional check has the result that only registered subscribers may participate in the service, the first subscriber is notified that his subscriber data are automatically being assigned a first pseudonym that will be temporarily stored in a storage device of the telecommunications network and will be deleted after the first subscriber's use of the service ends, after which the first pseudonym is transmitted to the second subscriber (S12), whereupon the method continues from step d).

9. Method according to any one of the preceding claims, **characterized in that** the subscriber data of the second subscriber that are loaded from the storage device in the telecommunications network in step f) include data on communications means of the second subscriber.

10. Method according to any one of the preceding claims, **characterized in that** before step f) is carried out, a check is made as to whether the subscriber data of the first subscriber are stored in a restricted list (S51), and **in that** if applicable, setup of the communication connection is terminated with notification of a restriction (S7).

11. Method according to claim 9, **characterized in that** the communication connection with the second subscriber is set up as a function of the access method of the first subscriber, the accessibility of communications means of the second subscriber and/or a series of communications means of the second subscriber stored in the loaded subscriber data.

12. Method according to any one of the preceding claims, **characterized in that** registration for the service can take place via the Internet, by telephone, or by SMS message.

13. Method according to claim 12, **characterized in that** in the case of registration via the Internet, a server receives a pseudonym (S13) and an associated destination address (S14),
provisionally records the pseudonym and the destination address in a service database (S15),
automatically generates a PIN for the registration and sends it to the destination address (S16), and
upon receiving the PIN (S17), enters the pseudonym and destination address in the service database (S18), by which means the registration is completed and the service is available to the registered subscriber.

14. Method according to claim 12 or 13, **characterized in that** in the case of registration by SMS message, an SMS message with a pseudonym is received and the pseudonym is temporarily stored (S22),
an additional SMS message is waited for as confirmation (S23), and
upon receipt of the SMS message for confirmation, the pseudonym and associated subscriber data are entered in a service database (S18).

15. Method according to claim 12, 13, or 14, **characterized in that** in the case of registration by telephone, a check is made as to whether the subscriber number of a calling subscriber connection is suppressed (S19),
and if not, a pseudonym is received and temporarily stored (S20),
a confirmation message from the subscriber connection is waited for (S21), and
upon receipt of the confirmation message, the pseudonym and associated subscriber data are entered in a service database (S18).

16. Method according to claim 15, **characterized in that** in the case of a suppressed subscriber number, the subscriber number is recognized by the setting of an appropriate parameter in a platform implementing the service.

17. Method according to claim 15, **characterized in that** in the event that it is determined that the calling subscriber's subscriber number is suppressed, a request to enter the subscriber number is made, and upon receipt of an entered subscriber number, a PIN for unlocking the registration and for authentication to use the service is automatically generated, stored, and transmitted to the entered subscriber number.

18. Network node (16) of a telecommunications network (14) that is configured by programming to carry out a method according to any one of the preceding claims.

19. Network node according to claim 18, **characterized in that** it includes a database (18) in which are stored data records that each contain a pseudonym of a subscriber to the service and his subscriber data.

20. Network node according to claim 19, **characterized in that** each data record also contains a routing table with forwarding destinations of a subscriber.

21. Network node according to claim 19 or 20, **characterized in that** each data record also contains statistical data on the use of a service by a subscriber.

22. Network node according to any one of claims 18 through 21, **characterized in that** it has an interface through which a data record of a subscriber can be managed via a data network, in particular via the Internet.

23. Device for communicating in a telecommunications network, said device being designed to carry out a method according to any one of claims 1 through 17.

24. Device according to claim 23, **characterized in that** it includes a network node according to any one of claims 19 through 22.

## Revendications

1. Procédé de communication sur un réseau de télécommunicationscomprenant les étapes suivantes :
a) déclenchement, par un premier abonné, d'un établissement de liaison de communication par connexion à un service du réseau de télécommunicationset envoi de données d'abonné (S1), le service étant accessible par message court,
b) vérification, moyennant les données d'abonné reçues, si le premier abonné est enregistré pour le service (S2),
c) dans l'affirmative, chargement d'un premier pseudonyme du premier abonné à partir d'un dispositif de mémoire (S3),
d) réception, par le premier abonné, d'un second pseudonyme d'un second abonné avec lequel la liaison de communication doit être établie (S4), moyennant un message court,
e) vérification, si le second pseudonyme reçu est mémorisé dans le réseau de télécommunications(S5),
f) dans l'affirmative, chargement de données d'abonné du second abonné, attribuées au second pseudonyme, à partir d'un dispositif de mémoire et établissement de la liaison de communication avec le second abonné (S6),
g) dans la négative, fin de l'établissement de la liaison de communication (S7).

2. Procédé selon la revendication 1, **caractérisé en ce que** le service est en outre accessible via l'internet et / ou par téléphone.

3. Procédé selon la revendication 1 ou 2, **caractérisé en ce que** le service avec lequel une connexion est établie, est un numéro d'appel premium sur le réseau de télécommunicationsou, dans le cas d'une connexion via l'internet, un service facturé par l'intermédiaire d'un système de paiement séparé.

4. Procédé selon la revendication 1, 2 ou 3, **caractérisé en ce qu'**il consiste, avant d'exécuter l'étape b), à vérifier si les données d'abonné du premier abonné sont stockées dans une liste de blocage (S8), et, le cas échéant, à terminer l'établissement de la liaison de communication avec une indication de blocage (S9).

5. Procédé selon l'une des revendications 1 à 4, **caractérisé en ce que**, si la vérification au cours de l'étape b) révèle que le premier abonné n'est pas enregistré pour le service, une autre vérification sera réalisée pour déterminer si des abonnés non enregistrés pour le service sont autorisés à bénéficier du service (S10).

6. Procédé selon la revendication 5, **caractérisé en ce que**, si l'autre vérification révèle que seuls des abonnés enregistrés sont autorisés à bénéficier du service, le premier abonné est averti qu'il doit s'enregistrer pour le service (S11), puis l'établissement de la liaison de communication est quitté.

7. Procédé selon la revendication 5, **caractérisé en ce que**, si l'autre vérification révèle que seuls des abonnés enregistrés sont autorisés à bénéficier du service, le premier abonné est averti que ses données d'abonné sont envoyées au second abonné (S12), puis la procédure se poursuit à l'étape d).

8. Procédé selon la revendication 5, **caractérisé en ce que**, si l'autre vérification révèle que seuls des abonnés enregistrés sont autorisés à bénéficier du service, le premier abonné est averti qu'un premier pseudonyme est automatiquement attribué à ses données d'abonné et stocké temporairement dans un dispositif de mémoire du réseau de télécommunicationsavant d'être supprimé après la fin de l'utilisation du service par le premier abonné, puis le premier pseudonyme est envoyé au second abonné (S 12) et la procédure se poursuit à l'étape d).

9. Procédé selon l'une des revendications précédentes, **caractérisé en ce que** les données d'abonné du second abonné, chargées au cours de l'étape f) à partir du dispositif de mémoire du réseau de télécommunication, comprennent des données relatives aux moyens de communication du second abonné.

10. Procédé selon l'une des revendications précédentes, **caractérisé en ce qu'**il consiste, avant d'exécuter l'étape f), à vérifier si les données d'abonné du premier abonné sont stockées dans une liste de blocage (S51) et, le cas échéant, à terminer l'établissement de la liaison de communication avec une indication de blocage (S7).

11. Procédé selon la revendication 9, **caractérisé en ce que** la liaison de communication avec le second abonné est établie en fonction du chemin d'accès du premier abonné, de l'accessibilité de moyens de communication du second abonné et/ou d'une succession de moyens de communication du second abonné, mémorisée dans les données d'abonné chargées.

12. Procédé selon l'une des revendications précédentes, **caractérisé en ce qu'**un enregistrement pour le service peut s'effectuer via l'internet, par téléphone ou par message court.

13. Procédé selon la revendication 12, **caractérisé en ce que**, dans le cas d'un enregistrement via l'internet, un serveur reçoit un pseudonyme (S13) et une adresse de destination associée (S14), note le pseudonyme et l'adresse de destination dans une base de données de service (S15), génère automatiquement un PIN pour l'enregistrement et l'envoie à l'adresse de destination (S16), et, après réception du PIN (S17), entre le pseudonyme et l'adresse de destination dans la base de données de service (S18) avant de terminer la procédure d'enregistrement et de mettre le service à la disposition de l'abonné enregistré.

14. Procédé selon l'une des revendications 12 ou 13, **caractérisé en ce qu'**il consiste, dans le cas d'un enregistrement par message court, à recevoir un message court avec un pseudonyme et à mémoriser le pseudonyme provisoirement (S22), à attendre un autre message court pour confirmation (S23) et, après réception du message court de confirmation, à entrer le pseudonyme et des données d'abonné associées dans une base de données de service (S18).

15. Procédé selon l'une des revendications 12, 13 ou 14, **caractérisé en ce qu'**il consiste, dans le cas d'un enregistrement par téléphone, à vérifier si le numéro d'appel d'une ligne d'abonné appelante est masqué (S19), dans la négative, un pseudonyme étant reçu et mémorisé provisoirement (S20), à attendre un message de confirmation de la ligne d'abonné (S21), et, après réception du message de confirmation, à entrer le pseudonyme et des données d'abonné associées dans une base de données de service (S18).

16. Procédé selon la revendication 15, **caractérisé en ce que**, dans le cas d'un numéro d'appel masqué, le positionnement d'un paramètre correspondant sur une plate-forme d'implantation du service, permet de reconnaître le numéro d'appel.

17. Procédé selon la revendication 15, **caractérisé en ce que**, s'il s'avère que le numéro d'appel de la ligne d'abonné appelante est masqué, celle-ci est invitée à entrer le numéro d'appel, et **en ce que**, après réception d'un numéro d'appel entré, un PIN d'activation de l'enregistrement et d'authentification est généré, mémorisé et transmis au numéro d'appel entré pour l'utilisation du service.

18. Noeud de réseau (16) d'un réseau de télécommunications(14) programmé pour exécuter un procédé selon l'une des revendications précédentes.

19. Noeud de réseau selon la revendication 18, **caractérisé en ce qu'**il comprend une base de données (18) dans laquelle des ensembles de données sont mémorisés qui comportent respectivement un pseudonyme d'un abonné au service et les données d'abonné de ce dernier.

20. Noeud de réseau selon la revendication 19, **caractérisé en ce que** chaque ensemble de données comporte en outre une table de routage comprenant des cibles de redirection d'un abonné.

21. Noeud de réseau selon la revendication 19 ou 20, **caractérisé en ce que** chaque ensemble de données comporte en outre des données statistiques pour l'utilisation du service par un abonné.

22. Noeud de réseau selon l'une des revendications 18 à 21, **caractérisé en ce qu'**il comporte une interface par l'intermédiaire de laquelle un ensemble de données d'un abonné peut être géré par l'intermédiaire d'un réseau de données, notamment l'internet.

23. Dispositif de communication sur un réseau de télécommunicationsréalisé de manière à mettre en oeuvre un procédé selon l'une des revendications 1 à 17.

24. Dispositif selon la revendication 23, **caractérisé en ce qu'**il comprend un noeud de réseau selon l'une des revendications 19 à 22.
